# EUROPÄISCHE PATENTANMELDUNG

(11) **EP 4 790 504 A2**
(43) Veröffentlichungstag der Anmeldung: **12.08.2026**
(21) Anmeldenummer: 25222118.9
(22) Anmeldetag: 10.12.2025
(51) Int. Cl.: G05D 1/242, G05D 1/249, G05D 1/667

(54) **VERFAHREN ZUM BE- UND/ODER ENTLADEN EINES LADERAUMS, INSBESONDERE DES LADERAUMS EINES LASTKRAFTWAGENS, MIT EINEM AUTONOMEN LADEFAHRZEUG UND ABSICHERUNGSSYSTEM**

(30) Priorität: 07.02.2025 DE 102025104555
(71) Anmelder: SICK AG, 79183 Waldkirch (DE)
(72) Erfinder: TSCHIERSCHKY, Michael, 50767 Köln (DE); BEU, Peter, 52391 Vettweiß (DE)
(74) Vertreter: Manitz Finsterwald Patent- und Rechtsanwaltspartnerschaft mbB

(57) **Zusammenfassung**

Ausführungsform betrifft ein Verfahren zum Be- und/oder Entladen eines Laderaums, insbesondere des Laderaums eines Lastkraftwagens, Lkws, mit einem autonomen Ladefahrzeug, das mindestens einmal in den Laderaum einfährt, um mindestens ein Ladeobjekt abzuholen und/oder abzulegen, wobei ein Zugangsbereich des Laderaums durch eine stationäre Sensoreinrichtung mit mindestens einem ersten an dem Zugangsbereich angeordneten Sensor abgesichert wird, welcher ein stationäres Schutzfeld überwacht, wobei das Ladefahrzeug durch eine an dem Ladefahrzeug angeordnete mobile Sensoranordnung abgesichert wird, welche zumindest zeitweise ein an eine bauliche Begrenzung des Zugangsbereichs angepasstes Konturfeld überwacht. Dabei überwacht die mobile Sensoranordnung zumindest zeitweise ein auf eine Fahrtrichtung des Ladefahrzeugs ausgerichtetes frontales Schutzfeld, welches deaktiviert wird, sobald bei einem Einfahren des Ladefahrzeugs in den Laderaum die bauliche Begrenzung des Zugangsbereichs im Konturfeld detektiert wird.

## Beschreibung

Die Erfindung betrifft ein Verfahren zum Be- und/oder Entladen eines Laderaums, insbesondere des Laderaums eines Lastkraftwagens, Lkws, mit einem autonomen Ladefahrzeug, sowie ein Absicherungssystem zur Absicherung des Be- und/oder Entladens eines Laderaums, insbesondere des Laderaums eines Lkws, mit einem autonomen Fahrzeug nach dem Oberbegriff der unabhängigen Ansprüche.

Das Beladen und Entladen eines Lkws, insbesondere dessen Aufliegers, an einer Laderampe, welches als Truck Loading bezeichnet wird, erfolgt bislang manuell unter Einsatz von bemannten oder personengeführten Gabelstaplern. Dabei liegt es in der Verantwortung des Staplerfahrers oder einer Bedienperson, auf Personen zu achten und Unfälle zu vermeiden. Zwar werden im Logistikbereich bereits autonome Fahrzeuge, sogenannte Automated Guided Vehicles, AGVs, eingesetzt, die grundsätzlich in der Lage wären, das Truck Loading zu übernehmen oder zumindest einen Mischbetrieb zwischen manuellem und vollautomatisiertem Betrieb zu ermöglichen. Allerdings fehlt eine Lösung, um während des Be- und Entladevorgangs sicherzustellen, dass sich keine Person im Auflieger oder auf dem Weg dorthin befindet. In anderen automatisierten Logistikanwendungen arbeiten autonome Fahrzeuge ausschließlich in für Personen abgesperrten Bereichen. Dies ist jedoch an einer Laderampe nicht umsetzbar.

Autonome Fahrzeuge überwachen bereits zur Unfallvermeidung ihre Fahrt mit Sensoren, die an den jeweiligen AGVs angebracht sind. Hierbei wird beispielsweise ein Schutzfeld in Fahrtrichtung des AGVs erzeugt bzw. überwacht. Wird ein Objekt in dem Schutzfeld erkannt, so wird eine Gefahrensituation angenommen und das AGV abgebremst oder gänzlich gestoppt. Dazu wird eine berührungslos wirkende Schutzeinrichtung, die auf einem entsprechenden Sensor basiert, eingesetzt. Das Eindringen eines Objekts oder einer Person, insbesondere eines Körperteils einer Person, in ein Schutzfeld wird mit Hilfe eines oder mehrerer entsprechender Sensoren erkannt, ohne dass ein unmittelbarer mechanischer Kontakt erfolgt. Entsprechende Sensoren basieren auf unterschiedlichen physikalischen Prinzipien. Beispielsweise werden optische Sensoren, akustische Sensoren, beispielsweise Ultraschallsensoren, induktive oder kapazitive Sensoren, sowie Radarsensoren eingesetzt. Zur Unfallvermeidung verwendete Sensoren müssen zuverlässig arbeiten und aus diesem Grund hohe Sicherheitsanforderungen erfüllen, beispielsweise die Norm EN ISO 13849-1 für Maschinensicherheit und die Gerätenorm EN IEC 61496 für berührungslos wirkende Schutzeinrichtungen (BWS). Zur Erfüllung dieser Sicherheitsnormen sind eine Reihe von Maßnahmen zu treffen, wie die sichere elektronische Auswertung durch redundante, diversitäre Elektronik, Funktionsüberwachung oder Überwachung der Verschmutzung optischer Bauteile.

Sollen zur automatischen Be- bzw. Entladung von Lkw-Trailern besagte AGVs bzw. fahrerlose Transportfahrzeuge, FTF, eingesetzt werden, so sind die normalerweise mit einem AGV mitfahrenden Schutzfelder beim Navigieren innerhalb des Trailers hinderlich, da aufgrund der im Trailer bzw. Laderaum vorhandenen dicht gepackten Ladung, das Schutzfeld quasi nie frei von Objekten ist und das Fahrzeug somit praktisch nicht mehr aus einem Stillstand herauskommt. Zudem ist die derzeitig verfügbare Sensorik nicht in der Lage, sicher zwischen Personen und Objekten zu unterscheiden, weshalb Schutzfelder beim Navigieren innerhalb des Laderaums folglich gänzlich abgeschaltet werden müssen. Trotzdem ist es erforderlich sicherzustellen, dass ein Zutritt von Personen zuverlässig erkannt wird.

Eine Aufgabe besteht folglich darin, eine sichere Lösung für das automatisierte Be- bzw. Entladen des Laderaums eines Lkws, also das Be- bzw. Entladen des Laderaums des Lkws, unter Verwendung von mindestens einem autonomen Fahrzeug anzugeben.

Die Aufgabe wird gelöst durch das Verfahren sowie das Absicherungssystem der unabhängigen Patentansprüche. Weiterbildungen und Ausgestaltungen der Erfindung sind jeweils Gegenstand der abhängigen Patentansprüche.

Eine Ausführungsform der Erfindung betrifft ein Verfahren zum Be- und/oder Entladen eines Laderaums, insbesondere des Laderaums eines Lkws, mit einem autonomen Ladefahrzeug. Das Ladefahrzeug fährt dabei mindestens einmal in den Laderaum ein, um mindestens ein Ladeobjekt abzuholen und/oder abzulegen. Ein Zugangsbereich des Laderaums ist dabei durch eine stationäre Sensoreinrichtung mit mindestens einem ersten an dem Zugangsbereich angeordneten Sensor abgesichert, welcher ein stationäres Schutzfeld überwacht. Das Ladefahrzeug ist durch eine an dem Ladefahrzeug angeordnete mobile Sensoranordnung abgesichert, welche zumindest zeitweise ein an eine bauliche Begrenzung des Zugangsbereichs angepasstes Konturfeld überwacht. Dabei überwacht die mobile Sensoran-ordnung zumindest zeitweise ein auf eine Fahrtrichtung des Ladefahrzeugs ausgerichtetes frontales Schutzfeld, welches deaktiviert wird, sobald bei einem Fahren des Ladefahrzeugs in den Laderaum die bauliche Begrenzung des Zugangsbereichs im Konturfeld (d.h. mittels des Konturfelds) detektiert wird.

Das erfindungsgemäße Verfahren ermöglicht ein sicheres Be- bzw. Entladen des Lkw-Laderaums mit dem autonomen Ladefahrzeug, indem der Vorgang einerseits über die stationäre Sensoreinrichtung, welche an dem Zugangsbereich angebracht ist, sowie andererseits durch die mit dem Ladefahrzeug mitfahrende Sensoranordnung abgesichert wird. Mit Hilfe des stationären Schutzfelds detektiert die stationäre Sensoreinrichtung den Zugang von beispielsweise einer Person zum Laderaum des Lkws und seinem Zugangsbereich, welche für Personen einen Gefahrenbereich darstellen. Das mit dem autonomen Fahrzeug mitfahrende frontale Schutzfeld sichert anfänglich die Einfahrt des Ladefahrzeugs in den Laderaum ab. Zeitgleich wird durch die mobile Sensoranordnung das Konturfeld überwacht, so dass der genaue Zeitpunkt, an welchem das autonome Ladefahrzeug den Laderaum tatsächlich erreicht, detektiert wird. Sodann wird das frontale Schutzfeld deaktiviert oder stumm geschaltet, so dass das Ladefahrzeug innerhalb des Laderaums ungestört, also ohne Unterbrechung, navigieren kann. Ein potentieller Zutritt von Personen zu dem Laderaum während des Herumfahrens des autonomen Ladefahrzeugs im Laderaum des Lkws zum Ablegen oder Aufnehmen bzw. Abholen des mindestens einen Ladeobjekts wird durch die stationäre Sensoreinrichtung abgesichert. Der Zeitpunkt, an dem das frontale Schutzfeld deaktiviert wird, ist durch die Detektion der baulichen Begrenzung des Zugangsbereichs, beispielsweise einer seitlichen Gebäudewand, die den Zugangsbereich begrenzt, gegeben.

Der Laderaum ist also beispielsweise durch mindestens eine Wand abgeschlossen und somit nur durch den Zugangsbereich zugänglich, also betretbar oder befahrbar. Der Zugangsbereich repräsentiert den Übergang beispielsweise einer Fabrikhalle, in der Ladeobjekte gelagert werden, und dem Laderaum bzw. Anhänger bzw. Trailer eines Lkws. An dem Zugangsbereich kann ein Rolltor angebracht sein. Der Trailer wird also an das Rolltor gefahren und gesichert abgestellt. Sodann wird das Rolltor durch autorisiertes Bedienpersonal geöffnet. Unter Umständen wird eine Bühne auf die richtige Höhe eingerichtet. Nachdem sich das autorisierte Bedienpersonal davon überzeugt hat, dass sich keine Person in dem Laderaum des Lkws aufhält, wird das erfindungsgemäße Verfahren gestartet. In der Regel fährt das autonome Fahrzeug, welches beispielsweise als AGV oder als ein Autonomous Mobile Robot, AMR, realisiert ist, mehrfach in den Laderaum ein und wieder heraus, so dass das erfindungsgemäße Verfahren unter Umständen mehrmals hintereinander ausgeführt wird.

Der Zugangsbereich, der die einzige Möglichkeit darstellt, in den Laderaum des Lkws zu gelangen, ist von der stationären Sensoreinrichtung mit dem mindestens einen ersten Sensor abgesichert. Das autonome Ladefahrzeug ist von der mobilen Sensoranordnung abgesichert, welche ebenfalls mindestens einen Sensor aufweist. Der mindestens eine Sensor der mobilen Sensoranordnung ist beispielsweise ein optischer Sensor, welcher insbesondere auf dem Prinzip der Lichtlaufzeitmessung basiert.

Die eingangs aufgeführten Definitionen gelten auch für den folgenden Text, sofern nicht explizit etwas anderes erwähnt wird.

Zur Überwachung eines Schutzfeldes wird ein Sensor so konfiguriert, dass die Präsenz eines Objektes in einem als Schutzfeld definierten Bereich bzw. Ausschnitt aus dem Sichtfeld des Sensors detektiert wird. Ein derartiges Schutzfeld kann aktiviert oder auch gesetzt werden, so dass eine Detektion eines Objekts in seinem Bereich tatsächlich stattfindet. Wird ein Schutzfeld deaktiviert oder stummgeschaltet, wird ein in das Schutzfeld eindringende Objekt ignoriert. Ein Schutzfeld kann auch als Überwachungsfeld bezeichnet werden. Das Konturfeld ist ein spezielles Schutzfeld, welches dazu eingerichtet ist, ein Objekt, insbesondere dessen Kontur in einem definierten Bereich zu detektieren. Anders ausgedrückt ist das Konturfeld des AGVs zwar ähnlich zu einem Schutzfeld, jedoch ist es speziell auf die Detektion von Objekten im Bereich des Konturfelds ausgelegt, wobei eine Detektion eines Objekts dann zu einer entsprechenden Maßnahme führt. Erfindungsgemäß ist das Konturfeld insbesondere ausschließlich zur positiven Detektion eines Objekts, hier der baulichen Begrenzung des Laderaums, also z.B. einer Hallenmauer, eingerichtet. Das Konturfeld der mobilen Sensoranordnung wird beispielsweise bei der Konfiguration des Sensors der mobilen Sensoranordnung durch eine Person, die die Inbetriebnahme durchführt, festgelegt.

Gemäß einer Weiterbildung kommunizieren die stationäre Sensoreinrichtung und die mobile Sensoranordnung zur Absicherung zumindest des Laderaums gegen ein Betreten durch eine Person und/oder ein Befahren durch ein nicht angemeldetes Ladefahrzeug miteinander. Dies erfolgt insbesondere unter Benutzung einer drahtlosen Kommunikationseinrichtung, welche insbesondere als drahtloses lokales Netzwerk realisiert ist.

Während der Einfahrt sowie während der Fahrtbewegungen, die das autonome Ladefahrzeug innerhalb des Laderaums des Lkws ausführt, findet ein Informationsaustausch, also eine Kommunikation, zwischen der stationären Sensoreinrichtung und der mobilen Sensoranordnung statt. Wenn beispielsweise während den Bewegungen innerhalb des Laderaums durch das AGV die stationäre Sensoranordnung den Zutritt einer Person detektiert, so teilt sie dies dem AGV über die drahtlose Kommunikationseinrichtung mit. Somit kann auf eine möglicherweise bevorstehende Gefährdung proaktiv eingegangen werden und der Laderaum wird zu jeder Zeit sicherheitsgerichtet abgesichert.

Das drahtlose lokale Netzwerk kann beispielsweise als Englisch Wireless Local Area Network, WLAN, realisiert sein. Für die Kommunikation zwischen der mobilen Sensoranordnung und der stationären Sensoreinrichtung werden fachübliche Protokolle eingesetzt, beispielsweise das English Transport Control Protocol, TCP, welches auf dem Internetprotokoll IP, aufsetzt, also TCP/IP. Die verwendeten Protokolle werden dabei in fachüblicher Art und Weise im Sinne der Maschinensicherheit abgesichert, beispielsweise durch Verwendung sicherer TCP/IP Protokolle wie EFlpro oder ProfiNET/ProfiSAFE.

Gemäß einer Weiterbildung erfolgt bei einer Annäherung des Ladefahrzeugs an den Zugangsbereich und vor dem Einfahren in den Zugangsbereich ein Anmelden des Ladefahrzeugs an der stationären Sensoreinrichtung. Das Anmelden des Ladefahrzeugs umfasst ein Überprüfen einer Identität des Ladefahrzeugs anhand eines eindeutigen Kennzeichens, welches insbesondere durch eine Netzwerkadresse des Ladefahrzeugs gegeben ist.

Das AGV fährt also auf den Zugangsbereich zu und meldet sich an der stationären Sensoreinrichtung an, indem es beispielsweise eine entsprechende Nachricht über die drahtlose Kommunikationseinrichtung sendet. Bei der Identifikation des Ladefahrzeugs wird beispielsweise eine IP-Adresse oder eine Medium Access Control, MAC-, Adresse des Ladefahrzeugs verwendet. Bei erfolgreicher Identifikation wird die Weiterfahrt des Ladefahrzeugs freigegeben bzw. autorisiert. Das stationäre Schutzfeld der stationären Sensoreinrichtung wird beim Durchfahren des Zugangsbereichs durch das nun angemeldete AGV für genau dieses AGV durchlässig, also für die Passage des autorisierten Ladefahrzeugs stumm geschaltet. Wie bereits oben erwähnt, wird das Befahren eines nicht angemeldeten Ladefahrzeugs bzw. Betreten durch eine Person weiterhin von der stationären Sensoreinrichtung detektiert.

In einer Weiterbildung erzeugt die mobile Sensoranordnung des Ladefahrzeugs nach dem Anmelden des Ladefahrzeugs mindestens ein seitliches Schutzfeld, welches entlang einer parallel zur Fahrtrichtung des Ladefahrzeugs verlaufenden Seite des Ladefahrzeugs ausgerichtet ist und zur Detektion einer Person bzw. eines Objekts, die bzw. das sich neben dem Ladefahrzeug befindet, dient.

Ein Schutzfeld bezeichnet jeweils einen zweidimensionalen oder einen dreidimensionalen Bereich. Dieser Bereich hat definierte Abmessungen und wird von einem jeweiligen Sensor der stationären Sensoreinrichtung bzw. der mobilen Sensoranordnung überwacht. Dabei sind die Schutzfelder der mobilen Sensoranordnung bzw. des autonomen Ladefahrzeugs jeweils mit dem Ladefahrzeug mitfahrende Schutzfelder. Im Gegensatz dazu überwacht die stationäre Sensoreinrichtung das stationäre, also ortsgebundene Schutzfeld. Objekte, beispielsweise Hindernisse, oder/und Personen werden in dem jeweiligen Schutzfeld von dem Sensor detektiert. Daraufhin kann eine entsprechende Aktion bzw. Reaktion bewirkt werden. Beispielsweise kann eine Weiterfahrt des Ladefahrzeugs unterbunden werden.

Die mobile Sensoranordnung überwacht bzw. erzeugt mindestens ein seitliches Schutzfeld. Vorzugsweise überwacht die mobile Sensoranordnung des AGVs nach der Anmeldung an der stationären Sensoreinrichtung zwei seitliche Schutzfelder, die jeweils entlang einer parallel zur Fahrtrichtung des Ladefahrzeugs verlaufenden Seite des Fahrzeugs ausgerichtet sind. Damit kann das Auftauchen einer Person bzw. eines Objekts auf jeder Seite des AGVs detektiert werden.

Gemäß einer Weiterbildung wird das auf das Anmelden an der stationären Sensoreinrichtung folgende Einfahren des Ladefahrzeugs in dem Laderaum freigegeben, wenn weder die stationäre Sensoreinrichtung, noch die mobile Sensoranordnung in ihren jeweiligen Schutzfeldern ein, insbesondere nicht angemeldetes, Objekt detektieren.

Nach der erfolgreichen Anmeldung an der stationären Sensoreinrichtung, welche beispielsweise durch eine positive Rückmeldung von der stationären Sensoreinrichtung quittiert wird, setzt das AGV bevorzugt zwei seitliche Schutzfelder, sowie das frontale Schutzfeld und setzt seine Bewegung in Richtung des Zugangsbereichs fort. Das frontale Schutzfeld des autonomen Ladefahrzeugs überlappt dabei zumindest teilweise das stationäre Schutzfeld der stationären Sensoreinrichtung. Das tatsächliche Einfahren des Ladefahrzeugs in den Laderaum des Lkws wird nur freigegeben, wenn sowohl das stationäre Schutzfeld als auch alle Schutzfelder des AGVs frei von Personen bzw. Objekten sind.

In einer weiteren Ausführungsform überwacht bzw. setzt die mobile Sensoranordnung des Ladefahrzeugs nach dem Freigeben des Einfahrens in den Laderaum mindestens ein rückwärtiges Schutzfeld, welches entgegengesetzt zur Fahrtrichtung des Ladefahrzeugs ausgerichtet ist, und der Detektion einer Person, die sich hinter dem Fahrzeug befindet, dient.

Das AGV fährt also weiter vor in Richtung des Laderaums und aktiviert nun zusätzlich das rückwärtige Schutzfeld, um eventuell hinter dem Ladefahrzeug herlaufende Personen zu detektieren. Sobald dann das Konturfeld die bauliche Begrenzung des Laderaums, also beispielsweise die Gebäudewand, positiv detektiert, wird zuerst das frontale Schutzfeld stumm geschaltet.

Gemäß einer Weiterbildung werden alle Schutzfelder und das Konturfeld der mobilen Sensoranordnung des Ladefahrzeugs für dessen Navigation in dem Laderaum deaktiviert, sobald das Ladefahrzeug den Zugangsbereich passiert hat.

Der Zeitpunkt, wann das Ladefahrzeug den Zugangsbereich vollständig passiert hat, ist beispielsweise daran ersichtlich, dass das stationäre Schutzfeld der stationären Sensoreinrichtung kein Objekt mehr detektiert. Ab diesem Zeitpunkt navigiert das autonome Fahrzeug innerhalb des Laderaums des Lkws unter Verwendung der mobilen Sensoranordnung ohne jegliche Schutzfelder. Die Schutzfelder des AGV sind also im Laderaum deaktiviert bzw. stumm geschaltet. Ein oder mehrere Ladeobjekte werden im Laderaum abgelegt bzw. aus diesem abgeholt. Mit Vorteilen kann sich das unbemannte Ladefahrzeug im Laderaum des Lkws auf autonome Art und Weise fortbewegen und Ladeobjekte hin und her transportieren, ohne dass seine Fahrt durch eben diese Objekte immer wieder unterbrochen wird. Sollte während dieser Zeit eine Person versuchen, den Laderaum über den Zugangsbereich zu betreten, wird dies mit der stationären Sensoreinrichtung in ihrem Schutzfeld detektiert und an das Ladefahrzeug kommuniziert. Das Ladefahrzeug kann auf diese Art und Weise gestoppt werden. Somit ist das automatisierte Be-und Entladen des Lkws zu jedem Zeitpunkt sicher.

Gemäß einer Ausführungsform nimmt das Ladefahrzeug einen Sicherheitszustand ein, sobald eine Kommunikation zwischen der stationären Sensoreinrichtung und der mobilen Sensoreinrichtung abbricht. In dem Sicherheitszustand hält das Ladefahrzeug an. Alternativ wird zumindest das frontale Schutzfeld der mobilen Sensoranordnung aktiviert, insbesondere werden sämtliche Schutzfelder der mobilen Sensoranordnung, wie das rückwärtige Schutzfeld und ein oder zwei seitliche Schutzfelder aktiviert.

Sofern die Kommunikation über das drahtlose Netzwerk zwischen stationärer Sensoreinrichtung und mobiler Sensoranordnung nicht mehr funktioniert, also abbricht, wird die Weiterfahrt des autonomen Ladefahrzeugs unterbunden. Alternativ wird entweder nur das frontale Schutzfeld des AGV aktiviert, oder alle Schutzfelder des AGVs aktiviert. Anders ausgedrückt wird das vorangegangene Stummschalten bzw. Deaktivieren der Schutzfelder des AGV beendet.

Gemäß einer Weiterbildung fährt das autonome Ladefahrzeug nach Ablegen und/oder Abholen des Ladeobjekts aus dem Laderaum aus, insbesondere unter Benutzung eines gleichen Weges wie beim Einfahren. Dabei wird während des Ausfahrens zuerst das in Fahrtrichtung des Ladefahrzeugs ausgerichtete frontale Schutzfeld der mobilen Sensoranordnung aktiviert, sobald ein vorderes Teil des Ladefahrzeugs den Zugangsbereich passiert. Anschließend wird mindestens ein seitliches Schutzfeld der mobilen Sensoranordnung bzw. des AGV, welches entlang einer parallel zur Fahrtrichtung des Fahrzeugs verlaufenden Seite des Fahrzeugs ausgerichtet ist, aktiviert, sobald das Ladefahrzeug den Zugangsbereich vollständig passiert hat.

Nachdem das AGV seine Ladung im Trailer verstaut bzw. aufgenommen hat, verlässt es auf dem gleichen Weg wie bei der Einfahrt den Laderaum bzw. Zugangsbereich. Sobald das stationäre Schutzfeld der stationären Sensoreinrichtung das Eindringen des AGVs aus Richtung des Laderaums detektiert, wenn also das zuerst ausfahrende vordere Teil des Ladefahrzeugs den Zugangsbereich überfährt, wird das in Ausfahrtrichtung gerichtete Schutzfeld des AGV aktiviert. Unabhängig davon, ob das AGV im Laderaum gewendet hat oder nicht, entspricht dieses Schutzfeld dem in Fahrtrichtung ausgerichteten frontalen Schutzfeld. Sobald das Fahrzeug durch Fortsetzen des Herausfahrens den Zugangsbereich in seiner ganzen Fahrzeuglänge, also vollständig, überfahren hat, werden auch die übrigen mobilen Schutzfelder des AGV wieder aktiviert. Ein das Annähern, die Einfahrt, das Verladen und die Ausfahrt umfassende Ladezyklus ist damit beendet.

Gemäß einer Weiterbildung weist die stationäre Sensoranordnung einen zweiten an dem Zugangsbereich angeordneten Sensor auf. Dabei sind der erste und der zweite Sensor an gegenüberliegenden Seiten des Zugangsbereichs, vorzugsweise an den überliegenden Seiten der baulichen Begrenzung, angebracht. Der zweite Sensor erzeugt ein weiteres stationäres Schutzfeld, welches das stationäre Schutzfeld des ersten Sensors zumindest teilweise überlappt.

Der erste und der zweite Sensor der stationären Sensoreinrichtung arbeiten jeweils nach einem berührungslos wirkenden Sensorprinzip, vorzugsweise nach einem optischen Sensorprinzip wie bei einem Lichtgitter, einem Laserscanner, einem Lidarsensor, einer Kamera oder einer 3D-Kamera, insbesondere Lichtlaufzeitkamera, aber auch nach nicht optischen Sensorprinzipien wie bei einem Radar oder Funkortungssystem, insbesondere einem Ultrabreitbandsystem. Der erste und der zweite Sensor können dabei beliebig aus den genannten und weiteren berührungslos wirkenden Sensoren ausgewählt werden. Beispielsweise wird der erste und der zweite Sensor jeweils als Sicherheitslaserscanner implementiert.

Gemäß einer Weiterbildung wird der Zugangsbereich auf Basis der stationären Schutzfelder der stationären Sensoreinrichtung in mindestens zwei separate Bereiche unterteilt, die mindestens einen ersten und einen zweiten Durchfahrtkorridor zur Durchquerung des Zugangsbereichs bilden. Das Ladefahrzeug benutzt für das Einfahren und das Ausfahren den ersten oder den zweiten Durchfahrtkorridor. Sobald die stationäre Sensoreinrichtung ein Objekt in dem nicht für das aktuelle Einfahren bzw. Ausfahren benutzten Durchfahrtkorridor detektiert, geht das Ladefahrzeug in einen Sicherheitszustand. In dem Sicherheitszustand hält das Ladefahrzeug an. Alternativ wird zumindest das frontale Schutzfeld der mobilen Sensoranordnung aktiviert, insbesondere werden sämtliche Schutzfelder der mobilen Sensoranordnung, wie beispielsweise das rückwärtige Schutzfeld und ein oder zwei seitliche Schutzfelder, aktiviert.

Wird der Zugangsbereich wie in dieser Ausführungsform mit zwei Sensoren der stationären Sensoreinrichtung abgesichert, so können dadurch mindestens zwei Durchfahrtkorridore, die auch jeweils als Gasse bezeichnet werden, gebildet werden. Diese Gassen sind rein virtuell vorhanden. Durch die Verwendung eines Durchfahrtkorridors kann jeweils lediglich ein Teil der Gesamtbreite des Zugangsbereichs für die Ein- bzw. Ausfahrt eines an diesem Korridor bzw. dieser Gasse angemeldeten AGVs verwendet werden. Dabei wird das jeweilige stationäre Schutzfeld des ersten und/oder zweiten Sensors für die Passage des wie oben beschrieben ordnungsgemäß angemeldeten AGVs in diesem Bereich partiell deaktiviert. Gleichzeitig bleiben die stationären Schutzfelder im Bereich der anderen Durchfahrtkorridore aktiviert. Wie oben bereits beschreiben, benutzt ein autonomes Ladefahrzeug zur Ein- und Ausfahrt denselben Weg, also denselben Durchfahrtkorridor. Meldet eines der stationären Schutzfelder die Detektion eines Objekts in dem nicht für das aktuelle Einfahren benutzten Durchfahrtkorridor, wird das Ladefahrzeug in einen Sicherheitszustand gesteuert. Dabei wird entweder jegliche autonome Fahrtbewegung unterbunden, oder es werden eines oder sämtliche Schutzfelder der mobilen Sensoranordnung aktiviert.

In einer Weiterbildung wird nach einem Anhalten des sich in einem Sicherheitszustand befindlichen Ladefahrzeugs das Ladefahrzeug nach Einschalten einer manuellen Steuerung unter Verwendung dieser Steuerung aus dem Laderaum herausgefahren.

Sofern also das AGV bei seinen Bewegungen zum Be- und Entladen in dem Laderaum des Lkws sicherheitsgerichtet, also aufgrund Detektion eines Objekts in dem stationären Schutzfeld oder in den stationären Schutzfeldern, an der autonomen Weiterfahrt gehindert wird, ist es möglich, mit der manuellen Steuerung das AGV aus dem Laderaum herauszufahren. Hierzu kann an dem AGV eine Zustimmeinrichtung vorgesehen sein, beispielsweise in Form eines Schalters oder eines Human-Machine-Interfaces (HMI), inbesondere eines Touchscreens.

Eine weitere Ausgestaltung der Erfindung betrifft ein Absicherungssystem zur Absicherung eine Be- und/oder Entladens eines Laderaums, insbesondere des Laderaums eines Lkws, mit einem autonomen Ladefahrzeug, welches mindestens einmal in den Laderaum einfährt, um mindestens ein Ladeobjekt abzuholen und/oder abzulegen. Das Absicherungssystem weist eine stationäre Sensoreinrichtung und eine an dem Ladefahrzeug angeordnete mobile Sensoranordnung auf. Die stationäre Sensoreinrichtung ist zur Absicherung eines Zugangsbereichs des Laderaums eingerichtet und weist mindestens einen ersten an dem Zugangsbereich angeordneten Sensor auf. Dieser ist zur Überwachung eines stationären Schutzfeldes eingerichtet. Die mobile Sensoranordnung ist zur Absicherung des Ladefahrzeugs sowie zur zumindest zeitweisen Überwachung eines an eine bauliche Begrenzung des Zugangsbereichs angepassten Konturfeldes eingerichtet. Des Weiteren ist die mobile Sensoranordnung dazu eingerichtet, zumindest zeitweise ein auf eine Fahrtrichtung des Ladefahrzeugs ausgerichtetes frontales Schutzfeld zu überwachen und dieses bei Detektion der baulichen Begrenzung des Zugangsbereichs im Konturfeld während eines Einfahrens des Ladefahrzeugs in den Laderaum zu deaktivieren.

In dem Absicherungssystem wird unter anderem das Konturfeld eingesetzt, um zu erkennen, wann das autonome Ladefahrzeug tatsächlich in den Laderaum einfährt, d.h. in diesem Fall, wenn das Konturfeld des AGV die Kontur der baulichen Begrenzung des Zugangsbereichs erkennt. Ab diesem Zeitpunkt wird zumindest das auf die Fahrtrichtung des Ladefahrzeugs ausgerichtete frontale Schutzfeld deaktiviert, so dass sich das autonome Ladefahrzeug anschließend in dem Laderaum bewegen kann, um Ladeobjekte abzulegen oder abzuholen. Eine Absicherung gegen Zutritt von Personen zu dem Laderaum wird währenddessen durch die stationäre Sensoreinrichtung umgesetzt. Somit wird ein automatisiertes Be- bzw. Entladen des Laderaums des Lkws durch autonome Fahrzeuge mit der gebotenen Sicherheit ermöglicht.

In einer Realisierungsmöglichkeit wird das oben beschriebene Verfahren von dem beschriebenen und beanspruchten Absicherungssystem ausgeführt. Im Übrigen gelten für das Absicherungssystem die Ausführungen zu dem erfindungsgemäßen Verfahren entsprechend, insbesondere hinsichtlich Vorteilen und Ausführungsformen bzw. Weiterbildungen.

In einer Weiterbildung umfasst der erste Sensor der stationären Sensoreinrichtung einen berührungslosen Sensor, insbesondere einen Laserscanner. Alternativ oder zusätzlich umfasst die mobile Sensoranordnung mindestens einen Sensor, welcher einen berührungslosen Sensor, insbesondere einen Laserscanner, aufweist.

In einer Weiterbildung umfasst die stationäre Sensoreinrichtung einen zweiten an dem Zugangsbereich angeordneten Sensor, der zur Überwachung eines weiteren stationären Schutzfeldes eingerichtet ist, wobei der erste und der zweite Sensor an einander gegenüberliegenden Seiten, vorzugsweise der baulichen Begrenzung, des Zugangsbereichs angebracht sind. Das stationäre Schutzfeld des ersten Sensors überlappt das stationäre Schutzfeld des zweiten Sensors zumindest teilweise.

Jeder eingesetzte Laserscanner ist dabei insbesondere als Sicherheits-Laserscanner implementiert.

Die genannten Ausführungsformen und Weiterbildungen können untereinander kombiniert werden, sofern sich nicht explizit etwas anderes ergibt oder beschrieben ist.

Die Erfindung wird nachfolgend beispielhaft anhand der Figuren näher erläutert. Funktions- bzw. wirkungsgleiche Elemente tragen gleiche Bezugszeichen. Es zeigen:
- Fig. 1: eine beispielhafte Ausführungsform eines Absicherungssystems wie vorgeschlagen,
- Fig. 2: ein beispielhaftes Szenario, in dem das vorgeschlagene Verfahren bzw. das Absicherungssystem eingesetzt ist, und
- Fig.3: eine beispielhafte Ausführungsform des Verfahrens wie vorgeschlagen.

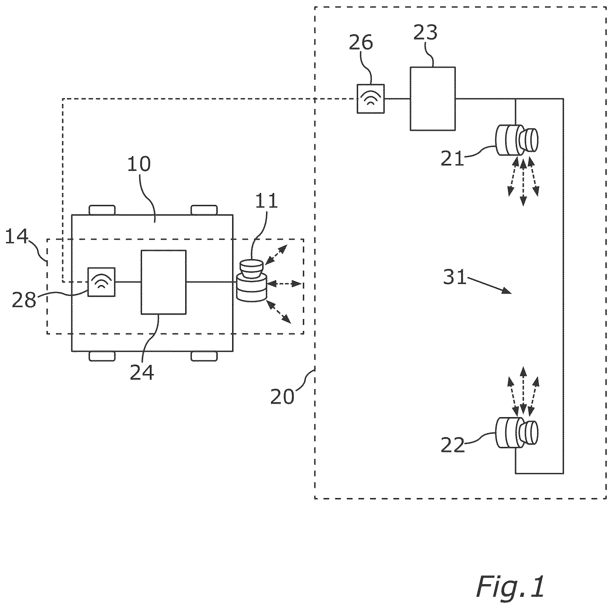

Fig. 1 zeigt eine beispielhafte Ausführungsform eines Absicherungssystems wie vorgeschlagen. Das Absicherungssystem umfasst eine stationäre Sensoreinrichtung 20 und eine mobile Sensoranordnung 14, die an einem autonomen Ladefahrzeug 10 angeordnet ist. Das Absicherungssystem ist zur Absicherung des Be-und/oder Entladen eines Laderaums, insbesondere des Laderaums eines Lkws, mit dem autonomen Ladefahrzeug 10 eingerichtet. Dabei fährt das autonome Ladefahrzeug 10 mindestens einmal in den Laderaum ein, um mindestens ein Ladeobjekt abzulegen und/oder abzuholen. Die stationäre Sensoreinrichtung 20 ist zur Absicherung eines Zugangsbereichs 31 des Laderaums des Lkws eingerichtet. Sie umfasst mindestens einen ersten Sensor 21. In diesem Ausführungsbeispiel umfasst die stationäre Sensoreinrichtung 20 zusätzlich einen zweiten Sensor 22. Der erste und der zweite Sensor 21, 22 sind an jeweils gegenüberliegenden Seiten des Zugangsbereichs 31 angeordnet.

Optional kann die stationäre Sensoreinrichtung 20 ein weiteren, in der Figur nicht gezeigten, Sensor, z.B. in Form eines Lichtgitters, umfassen. Dieser wird mittels einer logischen ODER-Funktion in der Sensoreinrichtung 20, insbesondere ihrer Steuerung 24, mit den anderen Sensoren 21, 22 verknüpft. Dies ist besonders vorteilhaft, wenn sich in dem Zugangsbereich bzw. in seiner Nähe potentiell viele Personen bewegen. Abschaltungen durch vorbeilaufende Personen werden verhindert und die Anlagenverfügbarkeit wird noch weiter erhöht. Eine nicht vorgesehene Detektion im Bereich der Sensoranordnung 20 und dem Lichtgitter führt zu einem Versetzen das AGVs in den sicheren Zustand.

Die mobile Sensoranordnung 14 umfasst mindestens einen dritten Sensor 11, welcher an dem autonomen Ladefahrzeug 10 angeordnet ist und somit mit diesem mitfährt. In den Figuren ist für die mobile Sensoranordnung 14 beispielhaft nur ein Sensor 11 beispielsweise in Fahrtrichtung vorgesehen, jedoch können ein oder mehrere weiterer Sensoren für eine rückwärtige und/oder eine seitliche Überwachung ergänzt werden kann. Die Sensoren 21 und 22 arbeiten wie beschrieben nach einem berührungslos wirkenden Sensorprinzip, vorzugsweise nach einem optischen Sensorprinzip. Auch nicht-optische Sensorprinzipien wie bei einem Radar oder Funkortungssystem, insbesondere einem Ultrabreitbandsystem, können verwendet werden. Die Sensoren 21, 22 und 11 können beliebig aus den genannten und weiteren berührungslos wirkenden Sensoren ausgewählt werden, wobei manche Sensoren sich nicht für beide Systeme 20, 14 gleichermaßen eignen, beispielsweise ein Lichtgitter nur für die stationäre Sensoreinrichtung 20. Die Erfindung wird im Folgenden beispielhaft mit Laserscannern beschrieben. Die Objekterkennung basiert dabei auf einem Schutzfeldkonzept, auch das ist beispielhaft, da es nur darauf ankommt, auf sichere Weise Objekte im Zugangsbereich 31 beziehungsweise im jeweiligen Fahrweg des Ladefahrzeugs 10 zu erfassen.

In der stationären Sensoreinrichtung 20 und dem mobilen Sensoranordnung 14 ist jeweils eine Steuer- und Auswertungseinheit 22, 24 vorgesehen. Die Steuer- und Auswertungsfunktionalität mit dem im Anschluss beschriebenen Verfahren kann praktisch beliebig auf die beiden Steuer- und Auswertungseinheiten 22, 24 und auch mindestens eine externe Steuer- und Auswertungseinheit eines übergeordneten Systems verteilt sein. Vorzugsweise erfolgt jedoch zumindest die jeweilige Objektdetektion beziehungsweise Schutzfeldauswertung nahe bei oder in dem zugehörigen Sensor 21, 22, 11.

Als Hardware der Steuer- und Auswertungseinheiten 22, 24 kommen beliebige Recheneinheiten in Betracht, etwa digitale Rechenbausteine wie ein Mikroprozessor oder eine Englisch Central Processing Unit, CPU, ein Englisch Field Programmable Gate Array, FPGA, ein digitaler Signalprozessor, DSP, ein Englisch Application-Specific Inte-grated Circuit, ASIC, ein Kl-Prozessor, eine Englisch Neural Processing Unit, NPU, eine Englisch Graphics Processing Unit, GPU, oder dergleichen. Eine externe Recheneinheit kann ein Computer beliebiger Bauart einschließlich Notebook, Smartphone, Tablet, oder (Sicherheits-)steuerung ebenso sein wie ein lokales Netzwerk Gerät, ein Edge-Device oder ein Gerät in einer Cloud. Sicherheitsrelevante Teile der Steuerung und Auswertung sind vorzugsweise in sicherer Hardware ausgeführt oder erreichen durch sonstige Maßnahmen wie Redundanz oder Tests ein gefordertes Sicherheitsniveau.

Weiterhin ist in der stationären Sensoreinrichtung 20 und der mobilen Sensoran-ordnung 14 jeweils eine Kommunikationsschnittstelle 26, 28 vorgesehen. Darüber stehen die stationäre Sensoreinrichtung 20 und die mobile Sensoranordnung 14 vorzugsweise drahtlos miteinander in Verbindung, um Daten, Informationen und Steuersignale auszutauschen. Die Kommunikationsverbindungen können über ein beliebiges Protokoll wie Bluetooth, WLAN, Wi-Fi, 3G/4G/5G und prinzipiell jegliches andere Protokoll realisiert sein.

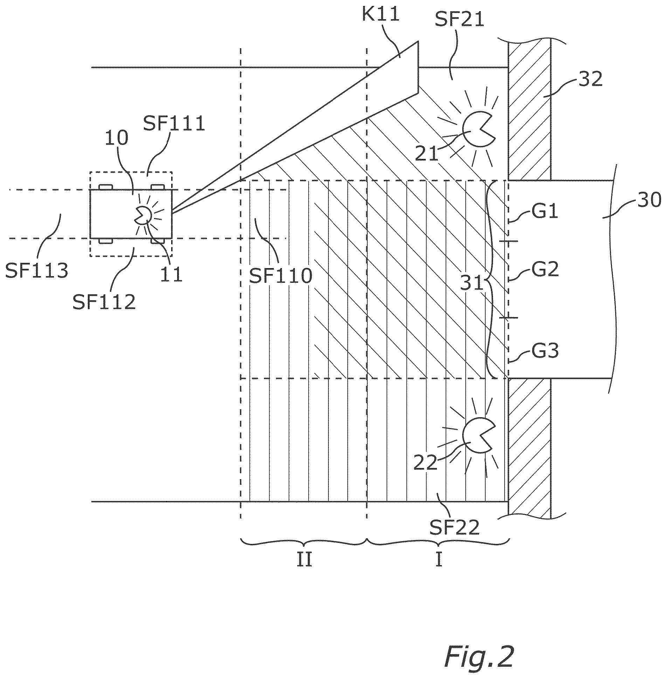

Fig. 2 zeigt ein beispielhaftes Szenario, in dem das vorgeschlagene Absicherungssystem, wie beispielhaft in Figur 1 gezeigt, und das vorgeschlagene Verfahren zum Einsatz kommen. Auch in dieser beispielhaften Ausführungsform umfasst die stationäre Sensoreinrichtung den ersten und den zweiten Sensor 21, 22. Der erste Sensor 21 erzeugt ein erstes stationäres Schutzfeld SF21. Der zweite Sensor 22 erzeugt ein zweites stationäres Schutzfeld SF22. Die Schutzfelder SF21 und SF22 überlappen sich teilweise. Der Zugangsbereich 31 ist zu beiden Seiten durch eine bauliche Begrenzung 32, beispielsweise eine Mauer, begrenzt. Der zu beladende oder entladende Lkw fährt in der gezeigten Darstellung von rechts kommend rückwärts mit seinem Trailer bzw. Anhänger an den Zugangsbereich 31 dran. Autorisiertes Bedienpersonal nimmt Schritte zur Vorbereitung des automatisierten Be- bzw. Entladens des Laderaums 30 vor, indem es beispielsweise ein Rolltor am Zugangsbereich 31 öffnet, überprüft, dass der Laderaum 30 frei von Personen ist und das automatisierte Laden gemäß dem vorgeschlagenen Verfahren freigibt.

Die Sensoren 21 und 22 sind wie dargestellt seitlich am Zugangsbereich 31, insbesondere an dessen baulicher Begrenzung 32 angeordnet. Im Beispiel der Figur 2 werden auf Basis der Schutzfelder SF21 und SF22 drei Durchfahrtkorridore G1, G2 und G3 im Zugangsbereich 31 virtuell gebildet. Diese sind jeweils so breit, dass ein autonomes Ladefahrzeug 10 aufgrund partieller Deaktivierung des bzw. der Schutzfelder SF21, SF22 in diesem Bereich nach Anmeldung an der stationären Sensoranordnung 20 über diesen Durchfahrtkorridor in den Laderaum 30 einfahren kann.

Die mobile Sensoranordnung umfasst den dritten Sensor 11, welcher dazu eingerichtet ist, zumindest zeitweise ein frontales Schutzfeld SF110, ein erstes seitliches Schutzfeld SF111, ein zweites seitliches Schutzfeld SF112 und ein rückwärtiges Schutzfeld SF113 zu überwachen. Zudem überwacht der dritte Sensor 11 das Konturfeld K11.

Jedes der stationären Schutzfelder SF21 und SF22 kann zudem in jeweils einen inneren Bereich I und einen äußeren Bereich II wie dargestellt aufgeteilt sein. Der innere Bereich I eines jeweiligen stationären Schutzfeldes SF21, SF22 grenzt dabei direkt an den Zugangsbereich 31 an, während der jeweilige äußere Bereich II der stationären Schutzfelder SF21, SF22 an die von dem Zugangsbereich 31 abgewandte Seite des inneren Bereichs I anschließt.

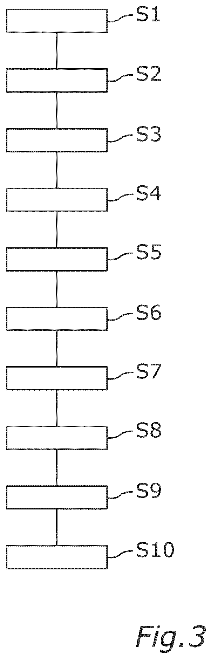

Das erfindungsgemäße Verfahren wird im Folgenden beispielhaft anhand des Szenarios von Fig. 2 in Verbindung mit der beispielhaften Ausführungsform von Fig. 3 näher erläutert.

Im Schritt S1 fährt das autonome Ladefahrzeug 10 an das erfindungsgemäße Absicherungssystem heran und meldet sich an der stationären Sensoreinrichtung an. Optional gibt das Ladefahrzeug 10 bei der Anmeldung zusätzlich an, auf welchem Weg, hier über welchen der Durchfahrtkorridore G1, G2 oder G3, die Zufahrt zum Laderaum 30 erfolgen soll.

Im Schritt S2 aktiviert das Ladefahrzeug 10 nach positiver Rückmeldung der stationären Sensoreinrichtung die seitlichen Überwachungsfelder SF111 und SF112, sowie das frontale Schutzfeld SF110, welches sich mit dem äußeren Bereich II der stationären Schutzfelder SF21 und SF22 im Bereich einer Verlängerung des Korridors G1 überlappt.

Im Schritt S3 wird überprüft, ob alle Schutzfelder SF21, SF22 der stationären Sensoreinrichtung und die Schutzfelder SF110, SF111 und SF112 des Ladefahrzeugs 10 ohne Objektdetektion sind. Sofern dies zutrifft, bekommt im Schritt S4 das Ladefahrzeug 10 von der stationären Sensoreinrichtung die Freigabe für die Weiterfahrt.

Im Schritt S5 wird bei weiterer Annäherung an den Zugangsbereich 31, insbesondere bei Erreichen des äußeren II und des inneren I Bereichs der stationären Schutzfelder SF21, SF22 das rückwärtige Schutzfeld SF113 des AGV 10 aktiviert. Zu diesem Zeitpunkt ist das Konturfeld K11 aktiviert. Das AGV fährt weiter.

Im Schritt S6 detektiert das Konturfeld K11 die Gebäudewand 32, was zur Deaktivierung des frontalen Schutzfeldes SF110 des Ladefahrzeugs 10 führt.

Im Schritt S7 ist das Ladefahrzeug 10 komplett in den Laderaum 30 eingefahren, so dass keines der Schutzfelder SF21 und SF22 weder in seinem inneren noch in seinem äußeren Bereich I, II das AGV 10 mehr detektieren. Nun werden alle Schutzfelder des AGV 10, also auch die seitlichen Schutzfelder SF111 und SF112 sowie das rückwärtige Schutzfeld SF113 stumm geschaltet. Das AGV 10 kann jetzt die erforderlichen autonomen Fahrtbewegungen zum Ablegen oder Abholen des Ladeobjekts durchführen.

Im Schritt S8 hat das AGV 10 den Be- bzw. Entladevorgang abgeschlossen und verlässt auf dem gleichen Weg wie bei der Einfahrt den Laderaum. Sobald der innere Bereich I des stationären Schutzfeldes SF21 das Ladefahrzeug 10 detektiert, wird das Schutzfeld SF113, welches sich nun in Fahrtrichtung des Ladefahrzeugs 10 befindet, aktiviert.

In Schritt S9 werden sobald der äußere Bereich II des Schutzfeldes SF21 das Ladefahrzeug 10 detektiert, auch die seitlichen Schutzfelder SF111 und SF112 aktiviert. Dies bedeutet nämlich, dass das Ladefahrzeug 10 in voller Länge aus dem Zugangsbereich 31 bzw. den stationären Schutzfeldern SF21, SF22 ausgefahren ist.

In Schritt S10 hat das AGV 10 den Bereich verlassen und alle für das freie Fahren erforderlichen Schutzfelder werden entsprechen der Fahrzeugkonfiguration aktiviert.

### Bezugszeichenliste

- 10: Ladefahrzeug
- 11, 21, 22: Sensor
- 14: mobile Sensoranordnung
- 20: stationäre Sensoreinrichtung
- 26, 28: Kommunikationseinrichtung
- 23, 24: Steuerung
- 30: Laderaum
- 31: Zugangsbereich
- 32: bauliche Begrenzung
- SF21, SF22: stationäres Schutzfeld
- SF110, SF111, SF112, SF113: mobiles Schutzfeld
- K11: Konturfeld
- G1, G2, G3: Durchfahrtkorridor
- I, II: Bereich
- S1, S2, ...., S10: Schritt

## Patentansprüche

1. Verfahren zum Be- und/oder Entladen eines Laderaums, insbesondere des Laderaums (30) eines Lastkraftwagens, Lkws, mit einem autonomen Ladefahrzeug (10), das mindestens einmal in den Laderaum einfährt, um mindestens ein Ladeobjekt abzuholen und/oder abzulegen, wobei ein Zugangsbereich (31) des Laderaums durch eine stationäre Sensoreinrichtung (20) mit mindestens einem ersten an dem Zugangsbereich angeordneten Sensor (21) abgesichert wird, welcher ein stationäres Schutzfeld (SF21) überwacht, wobei das Ladefahrzeug durch eine an dem Ladefahrzeug angeordnete mobile Sensoranordnung (14) abgesichert wird, welche zumindest zeitweise ein an eine bauliche Begrenzung (32) des Zugangsbereichs (31) angepasstes Konturfeld (K11) überwacht,
wobei die mobile Sensoranordnung (14) zumindest zeitweise ein auf eine Fahrtrichtung des Ladefahrzeugs (10) ausgerichtetes frontales Schutzfeld (SF110) überwacht, welches deaktiviert wird, sobald bei einem Einfahren des Ladefahrzeugs (10) in den Laderaum (30) die bauliche Begrenzung (32) des Zugangsbereichs (31) im Konturfeld (K11) detektiert wird.

2. Verfahren nach Anspruch 1,
wobei die stationäre Sensoreinrichtung (20) und die mobile Sensoranordnung (14) zur Absicherung zumindest des Laderaums (30) gegen ein Betreten durch eine Person und/oder ein Befahren durch ein nicht angemeldetes Ladefahrzeug miteinander kommunizieren, insbesondere unter Benutzung einer drahtlosen Kommunikationseinrichtung (26, 28) , insbesondere eines drahtlosen lokalen Netzwerks.

3. Verfahren nach Anspruch 1 oder 2,
wobei bei einer Annäherung des Ladefahrzeugs (10) an den Zugangsbereich (31) und vor dem Einfahren in den Zugangsbereich (31) ein Anmelden (S1) des Ladefahrzeugs (10) an der stationären Sensoreinrichtung (20) erfolgt, wobei das Anmelden des Ladefahrzeugs (10) ein Überprüfen einer Identität des Ladefahrzeugs (10) anhand eines eindeutigen Kennzeichens, welches insbesondere durch eine Netzwerkadresse des Ladefahrzeugs (10) gegeben ist, umfasst.

4. Verfahren nach dem vorstehenden Anspruch,
wobei die mobile Sensoranordnung (14) des Ladefahrzeugs (10) nach dem Anmelden des Ladefahrzeugs mindestens ein seitliches Schutzfeld (SF111, SF112) überwacht, welches entlang einer parallel zur Fahrtrichtung des Ladefahrzeugs (10) verlaufenden Seite des Ladefahrzeugs (10) ausgerichtet ist, und zur Detektion einer Person beziehungsweise eines Objekts, die beziehungsweise das sich neben dem Ladefahrzeug befindet, dient.

5. Verfahren nach dem vorstehenden Anspruch,
wobei das auf das Anmelden folgende Einfahren des Ladefahrzeugs (10) in den Laderaum (30) freigegeben wird (S4), wenn weder die stationäre Sensoreinrichtung (20), noch die mobile Sensoranordnung (14) in ihren jeweiligen Schutzfeldern ein, insbesondere nicht angemeldetes, Objekt detektieren (S3).

6. Verfahren nach dem vorstehenden Anspruch,
wobei die mobile Sensoranordnung (14) des Ladefahrzeugs (10) nach dem Freigeben des Einfahrens mindestens ein rückwärtiges Schutzfeld (SF113) erzeugt (S5), welches entgegengesetzt zur Fahrtrichtung des Ladefahrzeugs (10) ausgerichtet ist, und zur Detektion einer Person, die sich hinter dem Ladefahrzeug (10) befindet, dient.

7. Verfahren nach dem vorstehenden Anspruch,
wobei sobald das Ladefahrzeug (10) den Zugangsbereich (31) passiert hat, für eine Navigation in dem Laderaum (30) alle Schutzfelder (SF110, SF111, SF112, SF113) und das Konturfeld (K11) der mobilen Sensoranordnung (14) des Ladefahrzeugs (10) deaktiviert werden (S7).

8. Verfahren nach einem der vorstehenden Ansprüche,
wobei das Ladefahrzeug (10) einen Sicherheitszustand einnimmt, sobald eine Kommunikation zwischen der stationären Sensoreinrichtung (20) und der mobile Sensoranordnung (14) abbricht,
wobei in dem Sicherheitszustand das Ladefahrzeug (10) anhält oder zumindest das von der mobilen Sensoranordnung (14) erzeugte frontale Schutzfeld (SF110), insbesondere sämtliche Schutzfelder, die von der mobilen Sensoranordnung (14) erzeugt werden, wie ein rückwärtiges Schutzfeld (SF113) und ein oder zwei seitliche Schutzfelder (SF111, SF112), aktiviert werden.

9. Verfahren nach einem der vorstehenden Ansprüche,
wobei das Ladefahrzeug (10) nach Ablegen und/oder Abholen des Ladeobjekts aus dem Laderaum (30) ausfährt, insbesondere unter Benutzung eines gleichen Weges wie beim Einfahren, und
wobei während des Ausfahrens zuerst das in Fahrtrichtung des Ladefahrzeug (10) ausgerichtete frontale Schutzfeld (SF110, SF113) der mobilen Sensoranordnung (14) aktiviert wird (S8), sobald ein vorderes Teil des Ladefahrzeugs (10) den Zugangsbereich (31) passiert und anschließend mindestens ein seitliches Schutzfeld (SF111, SF112) der mobilen Sensoran-ordnung (14), welches entlang einer parallel zur Fahrtrichtung des Ladefahrzeugs (10) verlaufenden Seite des Ladefahrzeugs (10) ausgerichtet ist, aktiviert wird (S9), sobald das Ladefahrzeug (10) den Zugangsbereich (31) vollständig passiert hat.

10. Verfahren nach einem der vorstehenden Ansprüche,
wobei die stationäre Sensoreinrichtung (20) einen zweiten an dem Zugangsbereich (31) angeordneten Sensor (22) aufweist, wobei der erste Sensor und der zweite Sensor (21, 22) an gegenüberliegenden Seiten, vorzugsweise an der baulichen Begrenzung (32), des Zugangsbereichs (31) angebracht sind, wobei der zweite Sensor (22) ein weiteres stationäres Schutzfeld (SF22) überwacht, wobei das stationäre Schutzfeld (SF21) des ersten Sensors das stationäre Schutzfeld (SF22) des zweiten Sensors zumindest teilweise überlappt.

11. Verfahren nach dem vorstehenden Anspruch,
wobei der Zugangsbereich (31) auf Basis der stationären Schutzfelder (SF21, SF22) der stationären Sensoreinrichtung (20) in mindestens zwei separate Bereiche unterteilt wird, die mindestens einen ersten und einen zweiten Durchfahrtkorridor (G1, G2) zur Durchquerung des Zugangsbereichs (31) bilden, wobei das Ladefahrzeug (10) für das Einfahren und das Ausfahren den ersten oder den zweiten Durchfahrtkorridor (G1, G2) benutzt, und wobei das Ladefahrzeug (10) in einen Sicherheitszustand geht sobald die stationäre Sensoreinrichtung (20) ein Objekt in dem nicht für das aktuelle Einfahren benutzten Durchfahrtkorridor (G1, G2) detektiert,
wobei in dem Sicherheitszustand das Ladefahrzeug (10) anhält oder zumindest das frontale Schutzfeld (SF110), insbesondere sämtliche Schutzfelder, wie ein rückwärtiges Schutzfeld (SF113) und ein oder zwei seitliche Schutzfelder (SF111, SF112), von der mobilen Sensoranordnung (14) überwacht werden.

12. Verfahren nach dem vorstehenden Anspruch,
wobei nach einem Anhalten des sich in einem Sicherheitszustand befindlichen Ladefahrzeugs (10) das Ladefahrzeug (10) nach Einschalten einer manuellen Steuerung unter Verwendung dieser Steuerung aus dem Laderaum (30) herausgefahren wird.

13. Absicherungssystem zur Absicherung eines Be- und/oder Entladens eines Laderaums, insbesondere des Laderaums (30) eines Lastkraftwagens, Lkws, mit einem autonomen Ladefahrzeug (10), das mindestens einmal in den Laderaum einfährt, um mindestens ein Ladeobjekt abzuholen und/oder abzulegen,
wobei das Absicherungssystem eine stationäre Sensoreinrichtung (20) und eine an dem Ladefahrzeug (10) angeordnete mobile Sensoranordnung (14) aufweist,
wobei die stationäre Sensoreinrichtung (20) zur Absicherung eines Zugangsbereichs (31) des Laderaums (30) eingerichtet ist und mindestens einen ersten an dem Zugangsbereich (31) angeordneten Sensor (21) aufweist, welcher zur Überwachung eines stationären Schutzfeldes (SF21) eingerichtet ist,
wobei die mobile Sensoranordnung (14) zur Absicherung des Ladefahrzeugs (10) sowie zur zumindest zeitweisen Überwachung eines an eine bauliche Begrenzung (32) des Zugangsbereichs (31) angepassten Konturfeldes (K11) eingerichtet ist,
wobei die mobile Sensoranordnung (14) weiter dazu eingerichtet ist, zumindest zeitweise ein auf eine Fahrtrichtung des Ladefahrzeugs (10) ausgerichtetes frontales Schutzfeld (SF110) zu überwachen und dieses bei Detektion der baulichen Begrenzung (32) des Zugangsbereichs (31) im Konturfeld (K11) während eines Einfahrens des Ladefahrzeugs (10) in den Laderaum (30) zu deaktivieren.

14. Absicherungssystem nach dem vorigen Anspruch,
wobei der erste Sensor (21) der stationären Sensoreinrichtung (20) einen berührungslosen Sensor umfasst, insbesondere einen Laserscanner, und/oder
wobei die mobile Sensoranordnung (14) mindestens einen Sensor (11) umfasst, welcher einen berührungslosen Sensor, insbesondere einen Laserscanner, aufweist.

15. Absicherungssystem nach dem vorigen Anspruch,
wobei die stationäre Sensoreinrichtung (20) einen zweiten an dem Zugangsbereich (31) angeordneten Sensor (22) umfasst, der zur Überwachung eines weiteren stationären Schutzfeldes (SF22) eingerichtet ist, wobei der erste und der zweite Sensor (21, 22) an einander gegenüberliegenden Seiten, vorzugsweise der baulichen Begrenzung (32), des Zugangsbereichs (31) angebracht sind, wobei das stationäre Schutzfeld (SF21) des ersten Sensors das stationäre Schutzfeld (SF22) des zweiten Sensors zumindest teilweise überlappt.
